# EUROPÄISCHE PATENTSCHRIFT

(11) **EP 4 194 720 B1**
(45) Veröffentlichungstag und Bekanntmachung des Hinweises auf die Patenterteilung: **18.09.2024**
(21) Anmeldenummer: 22207520.2
(22) Anmeldetag: 15.11.2022
(51) Int. Cl.: F16H 63/34, F16H 59/68

(54) **VERRIEGELUNGSEINHEIT**
LOCKING UNIT
UNITÉ DE VERROUILLAGE

(30) Priorität: 09.12.2021 DE 102021132545
(43) Veröffentlichungstag der Anmeldung: 14.06.2023
(73) Patentinhaber: SVM Schultz Verwaltungs-GmbH & Co. KG, 87700 Memmingen (DE)
(72) Erfinder: Wassermann, Ralph, 87752 Holzgünz (DE); Hölzle, Florian, 89257 Illertissen (DE); Wetzler, Matthias, 87746 Erkheim (DE)
(74) Vertreter: Patentanwälte Olbricht, Buchhold, Keulertz Partnerschaft mbB

(56) Entgegenhaltungen:
- EP-A1- 3 734 122
- EP-A1- 3 879 136
- DE-A1- 102012 223 736
- DE-A1- 102020 103 335

## Beschreibung

Die Erfindung betrifft eine Verriegelungseinheit, insbesondere für die Parksperre eines Automatikgetriebes.

Automatikgetriebe erfordern typischerweise eine Verriegelungseinheit, welche dazu in der Lage ist, ein Kraftfahrzeug zu halten, in welchem das Automatikgetriebe eingebaut ist. Dies wird typischerweise in Kraftfahrzeugen zusätzlich zu einer Feststellbremse gefordert. Derartige Verriegelungseinheiten können beispielsweise einen hydraulisch betätigbaren Kolben aufweisen, wobei die Verriegelungseinheiten typischerweise so ausgebildet sind, dass der Kolben zuverlässig längere Zeit in einer bestimmten Position gehalten werden kann. Dies ist sowohl während der Fahrt erforderlich, während welcher der Kolben nicht plötzlich seine Verriegelungsfunktion aktivieren soll, wie auch während einer Standzeit, während welcher die Sperrwirkung nicht verloren gehen soll.

Zunehmend wird gefordert, dass Verriegelungseinheiten so ausgebildet sein sollen, dass eine Verriegelung jederzeit überwacht werden kann. Dies soll möglichst zuverlässig erfolgen.

Das Dokument EP 3 879 136 A1 offenbart eine Verriegelungseinheit mit einem Führungselement, das Rastelemente radial auswärts drückt, wobei mit dem Führungselement ein magnetisches Element zum Senden der Position des Führungselements verbunden ist.

Das Dokument DE 10 2012 223 736 A1 offenbart eine Kolben-Zylinder-Anordnung mit einem Kolben, welcher axial beweglich im Inneren des als Gehäuses ausgebildeten Zylinders angeordnet ist.

Es ist deshalb eine Aufgabe der Erfindung, eine Verriegelungseinheit bereitzustellen, welche im Vergleich zu bekannten Ausführungen alternativ oder besser ausgeführt ist, beispielsweise eine zuverlässige Überwachung der Verriegelung ermöglicht. Dies wird erfindungsgemäß durch eine Verriegelungseinheit nach Anspruch 1 erreicht. Vorteilhafte Ausgestaltungen können beispielsweise den Unteransprüchen entnommen werden.

Die Erfindung betrifft eine Verriegelungseinheit, insbesondere für eine Parksperre eines Automatikgetriebes. Die Verriegelungseinheit weist einen hydraulisch betätigbaren Kolben auf. Sie weist einen Elektromagneten mit einer Spule und einem Anker auf. Sie weist mindestens ein Rastelement auf. Das Rastelement wirkt mit dem Anker oder einer daran angebrachten Ankerstange zusammen und der Kolben oder eine mit dem Kolben verbundene Hülse weist mindestens eine Rastaufnahme auf, so dass der Kolben durch das haltende Zusammenwirken des Rastelements mit der Rastaufnahme festlegbar ist.

Die Verriegelungseinheit weist eine Koppelstange auf, welche an einem ihrer Enden an dem Anker oder an der Ankerstange befestigt ist. Entgegengesetzt zum Anker oder der Ankerstange ist ein magnetisches Element am anderen Ende der Koppelstange angebracht. Die Koppelstange dient somit insbesondere zur Verbindung des magnetischen Elements mit dem Anker oder der Ankerstange. Die Verriegelungseinheit weist ein Führungsrohr auf, in welchem das magnetische Element geführt ist. Es ist ferner mindestens ein Vorspannelement vorgesehen, welches auf die Koppelstange wirkt und das magnetische Element im Führungsrohr radial spielfrei hält. Insbesondere wird dadurch auch ein Abstand zu einem Sensor minimiert.

Eine solche Verriegelungseinheit erlaubt es, in vorteilhafter Weise ein magnetisches Element bereitzustellen, mittels welchem die Position des Ankers oder der Ankerstange sensiert werden können. Durch die Koppelstange wird zunächst ein Abstand von einer Aktorspule des Elektromagneten erreicht, so dass keine Beeinflussung des Sensorsignals durch elektromagnetische Streufelder entsteht. Die Führung des magnetischen Elements im Führungsrohr bedeutet, dass das magnetische Element sich in definierter Weise bewegen kann, so dass auch die Messung definiert erfolgt. Das Vorspannelement sorgt dafür, das magnetische Element im Führungsrohr radial spielfrei zu halten, so dass nicht nur eine axiale Position, sondern auch eine radiale Position in definierter Weise eingestellt wird. Ein undefinierter Positionsversatz des magnetischen Elements im Führungsrohr quer zur Längsrichtung des Führungsrohrs und eine damit verbundene Verfälschung der Messung werden auf diese Weise vermieden. Ein solcher Positionsversatz in Querrichtung kann beispielsweise durch ein in Automotiveanwendungen übliches Schwingprofil (Trägheitskräfte) verursacht werden. Auch dieser Effekt wird vom Vorspannelement eliminiert.

Der hydraulisch betätigbare Kolben kann insbesondere als Hohlkolben ausgeführt sein. Er kann insbesondere in eine Parksperre eines Automatikgetriebes eingreifen oder eine solche Parksperre betätigen, wobei er typischerweise zwei Endstellungen hat, wobei eine Endstellung einem nicht verriegelten Zustand und eine weitere Endstellung einem verriegelten Zustand entspricht.

Der Elektromagnet kann insbesondere so ausgeführt sein, dass die Spule den Anker umgibt. Ein von der Spule erzeugtes Magnetfeld kann den Anker typischerweise eindimensional in zwei Richtungen betätigen.

Das Rastelement kann beispielsweise bei bestimmter Stellung von Anker oder Ankerstange nach außen gedrückt werden, so dass es in eine Rastaufnahme des Kolbens eingreift. Dadurch wird eine weitere Bewegung des Kolbens verhindert. Insbesondere kann der Kolben damit in einer seiner beiden Endstellungen fixiert werden. Der Kolben kann insbesondere eindimensional beweglich sein.

Das magnetische Element kann insbesondere als Permanentmagnet ausgeführt sein. Es kann jedoch grundsätzlich auch als Elektromagnet ausgeführt sein. Es erzeugt typischerweise ein Magnetfeld, welches von einem Detektor oder einem anderen Magnetfeld detektierenden Element erfasst wird, wobei dabei erzeugte Signale typischerweise elektronisch ausgewertet werden können, um Rückschluss auf einen Zustand des Ankers und/oder der Ankerstange zu geben.

Die Verriegelungseinheit kann insbesondere eine Verdrehsicherung der Koppelstange aufweisen. Die Verdrehsicherung kann insbesondere bewirken, dass eine Rotation der Koppelstange und/oder des magnetischen Elements und/oder des Vorspannelements relativ zum Sensor, Detektor, zum Anker oder zur Ankerstange oder relativ zu einer Hülse oder einem anderen Element vermieden wird. Bei einer solchen Rotation handelt es sich insbesondere um eine Rotation um eine Längsachse der Koppelstange und/oder um eine Rotation um eine Achse, entlang welcher sich Anker, Ankerstange und/oder Koppelstange bewegen. Insbesondere soll die Rotation um die magnetische Achse (zwischen Nordpol und Südpol) des magnetischen Elements unterbunden werden, weil dies die Messung verfälschen würde. Dies gilt insbesondere bei Verwendung eines im Querschnitt nicht rotationssymmetrischen, sondern beispielsweise kreissegmentförmigen und insbesondere dem Detektor zugewandten magnetischen Elements, wodurch Kosten eingespart werden können. Dadurch kann vermieden werden, dass sich die Koppelstange unerwünscht dreht, wobei eine solche Drehung die Messung verfälschen könnte.

Die Verdrehsicherung kann insbesondere mittels mindestens eines Vorsprungs an der Koppelstange ausgeführt sein, welcher in eine Nut einer Hülse oder eines anderen Elements, beispielsweise des Ankers oder der Ankerstange, eingreift. Die Verdrehsicherung kann auch mittels mindestens eines Vorsprungs an einer Hülse oder an einem anderen Element, beispielsweise dem Anker oder der Ankerstange ausgebildet sein, welcher in eine Nut der Koppelstange eingreift. Derartige Ausführungen haben sich als vorteilhaft erwiesen. Auch andere Ausführungen sind jedoch möglich.

Es sei darauf hingewiesen, dass die eben beschriebene Ausführung mit einer Verdrehsicherung sowie die spezifischen Ausführungen einer Verdrehsicherung einen eigenständigen Erfindungsaspekt darstellen können, welcher auch unabhängig von der Verwendung eines magnetischen Elements, eines Führungsrohrs und/oder eines Vorspannelements realisiert und dementsprechend auch beansprucht werden kann.

Das Vorspannelement kann insbesondere einstückig mit der Koppelstange ausgebildet sein. Dies erlaubt eine einfache Ausführung. Auch ein separates Anbringen des Vorspannelements ist jedoch möglich.

Das Vorspannelement kann beispielsweise in Form von einer elastischen Lasche oder in Form von zwei oder mehreren elastischen Laschen ausgebildet sein. Dies erlaubt eine einfache Ausführung, wobei derartige elastische Laschen typischerweise so ausgebildet sein können, dass sie aufgrund ihrer Elastizität grundsätzlich radial nach außen und damit gegen das Führungsrohr drücken.

Typischerweise weist jede Lasche ein freies Ende auf. Insbesondere können freie Enden zweier Laschen unmittelbar benachbart zueinander angeordnet sein. Dies erlaubt eine Realisierung einer nach außen gleichmäßigen, beispielsweise kreisrunden oder zumindest im Wesentlichen kreisrunden Form mit lediglich einer Unterbrechung zwischen den beiden freien Enden der Laschen, so dass die gewünschte Wirkung der Laschen über einen verhältnismäßig großen Umfangsbereich erzeugt werden kann.

Die Lasche oder die Laschen können insbesondere zumindest in etwa kreissegmentförmig ausgebildet sein. Dies erlaubt eine Anpassung an ein Führungsrohr. Das Führungsrohr kann dabei insbesondere einen kreisförmigen Innenquerschnitt aufweisen. Auch andere Ausführungen sind jedoch möglich. Allgemeiner gesagt können insbesondere die Laschen bzw. das Vorspannelement komplementär oder zumindest im Wesentlichen komplementär zu einem Innenquerschnitt des Führungsrohrs ausgebildet sein, an welchem sie anliegen.

Das Vorspannelement kann auch als Kappe mit mehreren abstehenden elastischen Fingern ausgebildet sein. Dies erlaubt eine einfache Montage des Vorspannelements und eine radial zumindest in etwa gleichmäßige Wirkung.

Das Vorspannelement kann auch als Druckfeder ausgeführt sein. Diese kann sich insbesondere gegen eine Innenwandung des Führungsrohrs abstützen.

Das magnetische Element kann insbesondere scheibensegmentförmig ausgebildet sein. Dies erlaubt ein einfaches Einfügen in eine typische Geometrie. Auch andere Geometrien sind jedoch möglich.

Das magnetische Element kann insbesondere auf einer zum mindestens einen Vorspannelement entgegengesetzten Seite an der Koppelstange angeordnet sein. Dies kann beispielsweise bedeuten, dass sich das magnetische Element auf einer Seite bezüglich eines Mittelpunkts befindet und sich das Vorspannelement auf der anderen Seite bezüglich des Mittelpunkts befindet.

Das Führungsrohr kann insbesondere als Bestandteil des Kolbens ausgebildet sein. Dadurch kann das Führungsrohr einfach integriert werden. Insbesondere kann das Führungsrohr entgegengesetzt zum Elektromagneten ausgebildet werden. Auch eine separate Ausbildung des Führungsrohrs ist jedoch möglich.

Die Verriegelungseinheit kann insbesondere einen Sensor zum Abfühlen eines von dem magnetischen Element erzeugten Magnetfelds aufweisen. Dadurch kann eine unmittelbare Auswertung einer Lage des magnetischen Elements und damit auch einer Lage bzw. einer axialen Position des Ankers und/oder der Ankerstange ermittelt werden.

Ausführungsbeispiele der Erfindung werden nachfolgend anhand der Figuren beschrieben. Dabei zeigen:
- Fig. 1:: eine Verriegelungseinheit gemäß einem ersten Ausführungsbeispiel,
- Fig. 2:: die Verriegelungseinheit in einem anderen Zustand,
- Fig. 3:: einen Teil der Verriegelungseinheit,
- Fig. 4:: weitere Teile der Verriegelungseinheit,
- Fig. 5:: einen Schnitt durch die Verriegelungseinheit,
- Fig. 6:: einen weiteren Schnitt durch die Verriegelungseinheit,
- Fig. 7:: einen Teil einer Verriegelungseinheit gemäß einem zweiten Ausführungsbeispiel,
- Fig. 8:: einen Teil der Verriegelungseinheit von Fig. 7 in einer anderen Ansicht,
- Fig. 9:: einen Teil einer Verriegelungseinheit gemäß einem dritten Ausführungsbeispiel, und
- Fig. 10:: einen Teil einer Verriegelungseinheit gemäß einem vierten Ausführungsbeispiel.

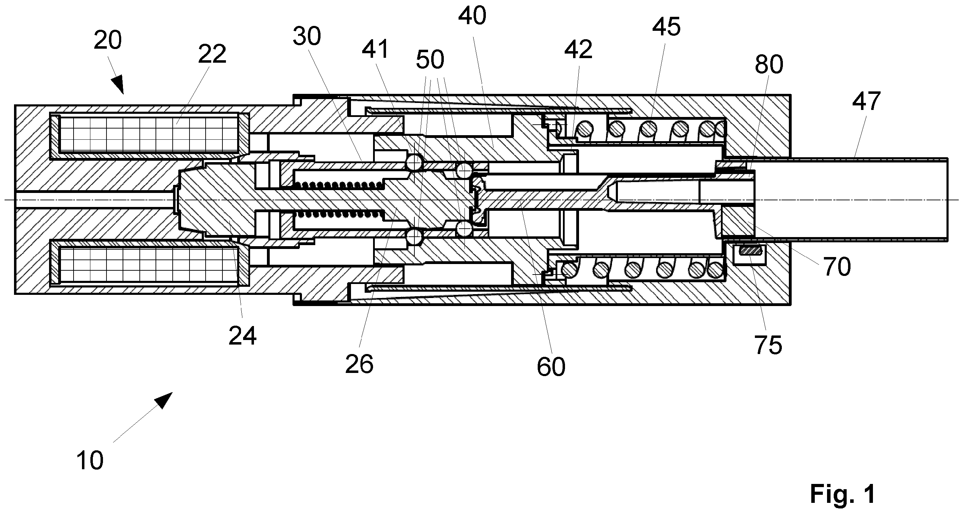

Fig. 1 zeigt eine Verriegelungseinheit 10 gemäß einem ersten Ausführungsbeispiel der Erfindung. Die Verriegelungseinheit 10 weist einen Elektromagneten 20 auf. Der Elektromagnet 20 weist eine elektrische Spule 22 auf, welche radial außerhalb eines Ankers 24 angeordnet ist. Der Anker 24 ist mittels der Spule 22 bewegbar, indem die Spule 22 gezielt mit Strom beaufschlagt wird und dadurch ein Magnetfeld erzeugt.

An dem Anker 24 ist eine Ankerstange 26 angebracht. Diese ragt in eine Hülse 30 ein, in welcher sich die Ankerstange 26 bewegen kann.

Radial außerhalb der Hülse 30 befindet sich ein Kolben 40, welcher unter anderem durch die Hülse 30 axial beweglich geführt wird. Der Kolben 40 kann sich somit in der Darstellung von Fig. 1 horizontal bewegen, an weiteren Bewegungen wird er gehindert.

Die Hülse 30 fixiert mehrere Rastelemente 50, welche vorliegend kugelförmig ausgebildet sind. Mittels der Ankerstange 26, welche außenseitig entsprechend geformt ist, können die Rastelemente 50 radial nach außen gedrückt werden und greifen dann in eine erste Rastaufnahme 41 oder in eine zweite Rastaufnahme 42 des Kolbens 40 ein. Dadurch kann der Kolben 40 in beiden axialen Endstellungen fixiert werden, indem die Rastelemente 50 durch die Ankerstange 26 nach außen gedrückt werden, wenn sich der Kolben 40 in einer entsprechenden axialen Stellung befindet.

Der Kolben 40 ist in nicht näher dargestellter Weise hydraulisch betätigbar. Zudem ist eine Kolbenfeder 45 vorgesehen, welche den Kolben 40 nach links vorspannt.

An der Ankerstange 26 ist eine Koppelstange 60 angebracht, welche sich axial mit der Ankerstange 26 und damit auch mit dem Anker 24 bewegt. Die Koppelstange 60 ragt an ihrem zur Ankerstange 26 entgegengesetzten Längsende in ein Führungsrohr 47 ein, welches als Bestandteil des Kolbens 40 ausgebildet ist. An dem rechten Längsende sind an der Koppelstange 60 ein magnetisches Element 70 und ein Vorspannelement 80 eingebracht. Das magnetische Element 70 erzeugt ein Magnetfeld, da es als Permanentmagnet ausgebildet ist. Radial außerhalb dazu befindet sich ein Sensor 75 zum Abfühlen des erzeugten Magnetfelds, so dass basierend auf einem abgefühlten Magnetfeld eine Position des magnetischen Elements 70 und damit auch des Ankers 24 ermittelt werden kann. Das Vorspannelement 80 stützt sich gegen den oberen Teil des Führungsrohrs 47 ab und fixiert das magnetische Element 70 radial nach unten. Dadurch wird ein radiales Spiel des magnetischen Elements 70 vermieden, wodurch auch vermieden wird, dass das magnetische Element 70 während des Betriebs unterschiedliche Abstände zum Innenumfang des Führungsrohrs 47 einnimmt und in der Konsequenz daraus der Abstand zum Sensor verändert wird, der letztlich der relevante Abstand ist. Dadurch kann die bereits beschriebene magnetische Detektion deutlich verbessert werden.

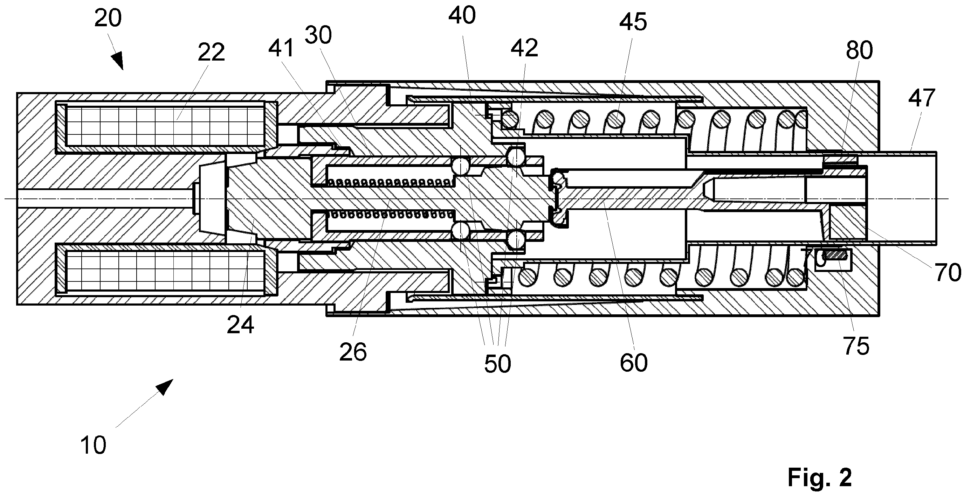

Fig. 2 zeigt die Verriegelungseinheit 10 in einem anderen Zustand. Während in dem in Fig. 1 dargestellten Zustand der Kolben 40 in einer Stellung ist, in welcher er nach rechts verschoben ist, so ist der Kolben 40 in dem in Fig. 2 dargestellten Zustand nach links verschoben und durch andere Rastelemente 50 in dieser Position verrastet. Die Kolbenfeder 45 ist dementsprechend insgesamt länger und/oder entspannt. Das magnetische Element 70 befindet sich im Vergleich zum Zustand von Fig. 1 weiter rechts, da sich auch Anker 24 und Ankerstange 26 weiter rechts befinden. Dieser Zustand kann durch den Sensor 75 detektiert werden, da sich das am Ort des Sensors 75 befindliche Magnetfeld zwischen diesen beiden Zuständen deutlich ändert.

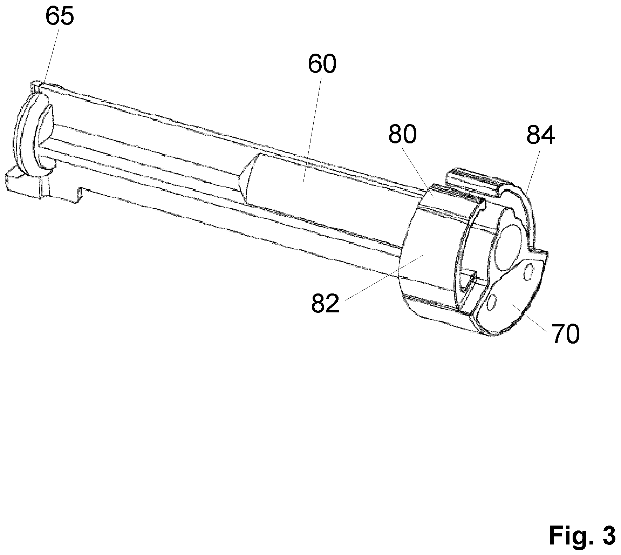

Fig. 3 zeigt die Koppelstange 60 mit dem daran angebrachten magnetischen Element 70 sowie dem angebrachten Vorspannelement 80. Wie gezeigt ist das Vorspannelement 80 vorliegend in Form zweier Laschen 82, 84 ausgebildet, welche elastisch sind und jeweils etwa einen Viertelkreis einnehmen. Ihre freien Enden weisen aufeinander zu und lassen nur einen geringen Spalt dazwischen. Zu den freien Enden entgegengesetzt sind die beiden elastischen Laschen 82, 84 an der Koppelstange 60 angebracht. Dies erlaubt eine einfache Ausführung und gegebenenfalls auch ein Auswechseln der Laschen 82, 84. Das magnetische Element 70 ist wie gezeigt kreissegmentförmig ausgeführt, es nimmt im Wesentlichen einen Teil der unteren Hälfte der Koppelstange 60 ein.

An dem linken Ende weist die Koppelstange 60 einen Vorsprung 65 auf. Dieser bildet, wie weiter unten näher beschrieben werden wird, einen Teil einer Verdrehsicherung.

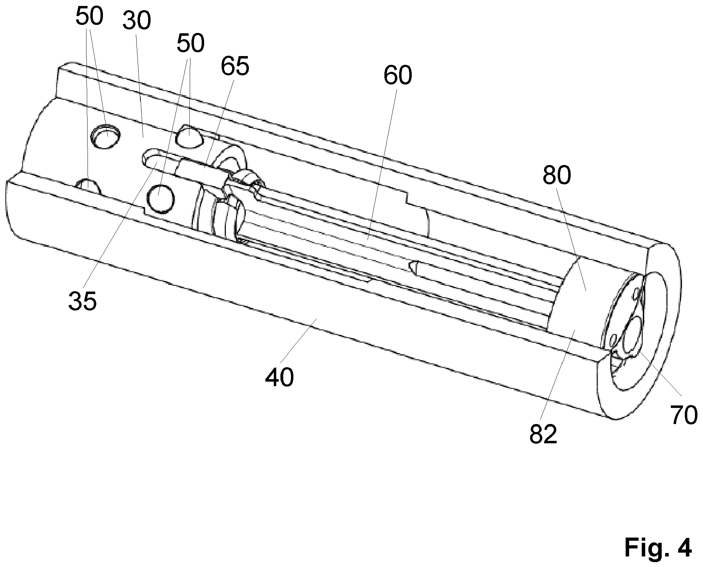

Dies ist in Fig. 4 näher dargestellt. Dabei sind nicht nur die in Fig. 3 zu sehenden Komponenten dargestellt, sondern zusätzlich auch die Hülse 30 und ein Teil des Kolbens 40. In der Hülse 30 ist eine Nut 35 ausgebildet, welche den Vorsprung 65 der Koppelstange 60 wie gezeigt aufnimmt. Dies erlaubt eine Sicherung der Koppelstange 60 gegen Verdrehen, so dass insgesamt nicht nur eine radiale Fixierung des magnetischen Elements 70 erfolgt, sondern auch ein Verdrehen um eine Längsachse der Koppelstange 60 wirkungsvoll verhindert wird. Da sich die Hülse 30 nicht mit anderen Komponenten mitbewegt, erfolgt die Verdrehsicherung in sehr zuverlässiger Weise.

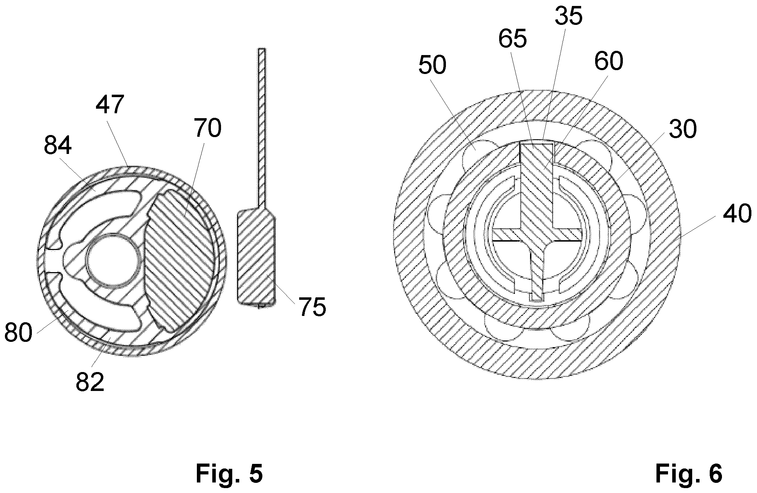

Fig. 5 zeigt einen Querschnitt durch die Verriegelungseinheit 10 an einer Stelle, an welcher sich das magnetische Element 70 befindet. Dabei ist die Ausführung der Vorspanneinheit 80 in Form von zwei Laschen 82, 84 klar zu sehen. Diese stützen sich intern in dem Führungsrohr 47 ab und sorgen somit dafür, dass das magnetische Element 70 auf den Sensor 75 zu vorgespannt wird. Dadurch wird eine definierte Positionsbeziehung innerhalb des Führungsrohrs 47 erreicht.

Fig. 6 zeigt einen Schnitt durch einen Teil der Verriegelungseinheit 10, wobei dabei zu sehen ist, wie der Vorsprung 65 in die Nut 35 der Hülse 30 eingreift. Dadurch wird wirkungsvoll verhindert, dass sich die Koppelstange 60 relativ zur Hülse 30 verdreht. Etwas weiter außen sind die Rastelemente 50 und der nochmal weiter außen liegende Kolben 40 zu sehen.

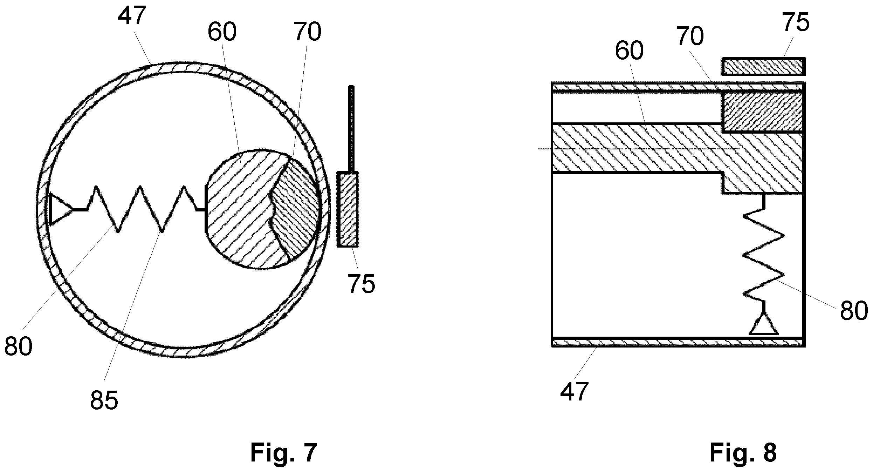

Fig. 7 zeigt einen Teil einer Verriegelungseinheit 10 gemäß einem zweiten Ausführungsbeispiel. Im Gegensatz zum ersten Ausführungsbeispiel ist dabei die Verriegelungseinheit 80 nicht in Form von Laschen ausgebildet, sondern in Form einer Druckfeder. Diese Druckfeder ist in der Darstellung von Fig. 7 rechtsseitig an der Koppelstange 60 befestigt und stützt sich linksseitig gegen eine Innenwandung des Führungsrohrs 47 ab. Auch dadurch wird das magnetische Element 70 auf den Sensor 75 radial zugespannt.

Fig. 8 zeigt einen Längsschnitt entlang einer Längsrichtung, wobei auch in diesem Fall zu sehen ist, dass sich das als Feder ausgebildete Vorspannelement 80 an einer inneren Oberfläche des Führungsrohrs 47 abstützt und das magnetische Element 70 dementsprechend radial spielfrei vorspannt.

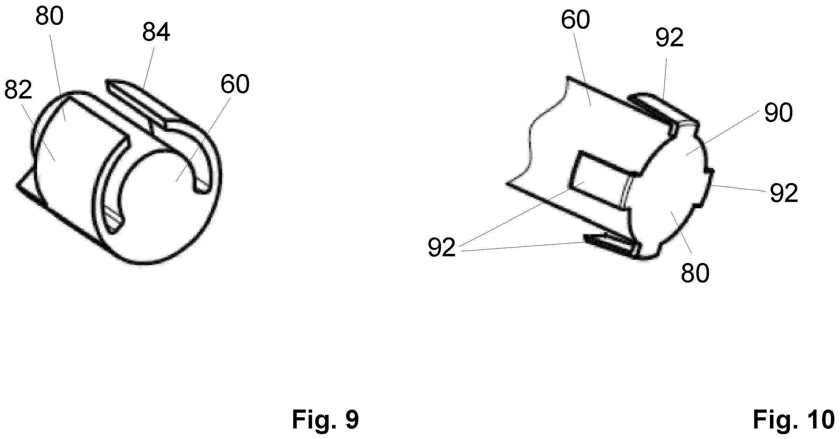

Fig. 9 zeigt einen Teil einer Verriegelungseinheit 10 gemäß einem dritten Ausführungsbeispiel. Im Gegensatz zum ersten Ausführungsbeispiel sind dabei die beiden elastischen Laschen 82, 84 integral mit dem Rest der Koppelstange 60 ausgebildet. Dies erlaubt eine besonders einfache Herstellung bei nahezu identischer Funktionalität.

Fig. 10 zeigt einen Teil einer Verriegelungseinheit 10 gemäß einem vierten Ausführungsbeispiel. Dabei ist das Vorspannelement 80 in Form einer Kappe 90 ausgebildet, welche über die Koppelstange 60 aufgestülpt ist und vorliegend vier abstehende elastische Finger 92 aufweist. Diese elastischen Finger 92 drücken radial gegen eine Innenwandung des Führungsrohrs 47, so dass auch dadurch eine radial spielfreie Führung erreicht wird.

Die Erfindung ist nicht auf eine der vorbeschriebenen Ausführungsformen beschränkt, sondern in vielfältiger Weise abwandelbar, wobei die Erfindung durch die nachfolgenden Ansprüche definiert wird.

### Bezugszeichenliste

- 10: Verriegelungseinheit
- 20: Elektromagnet
- 22: Spule
- 24: Anker
- 26: Ankerstange
- 30: Hülse
- 35: Nut
- 40: Kolben
- 41: Rastaufnahme
- 42: Rastaufnahme
- 45: Kolbenfeder
- 47: Führungsrohr
- 50: Rastelemente
- 60: Koppelstange
- 65: Vorsprung
- 70: magnetisches Element
- 75: Sensor
- 80: Vorspannelement
- 82: Lasche
- 84: Lasche
- 85: Druckfeder
- 90: Kappe
- 92: elastische Finger

## Patentansprüche

1. Verriegelungseinheit (10), aufweisend:
- einen hydraulisch betätigbaren Kolben (40),
- einen Elektromagneten (20) mit einer Spule (22) und einem Anker (24), und
- mindestens ein Rastelement (50),
- wobei das mindestens eine Rastelement (50) mit dem Anker (24) oder einer daran angebrachten Ankerstange (26) zusammenwirkt und der Kolben (40) oder eine mit dem Kolben verbundene Hülse mindestens eine Rastaufnahme (41, 42) aufweist, so dass der Kolben (40) durch das haltende Zusammenwirken des mindestens einen Rastelementes (50) mit der mindestens einen Rastaufnahme (41, 42) festlegbar ist,
wobei
- die Verriegelungseinheit (10) eine Koppelstange (60) aufweist, welche an einem ihrer Enden an dem Anker (24) oder an der Ankerstange (26) befestigt ist,
- entgegengesetzt zum Anker (24) oder zur Ankerstange (26) ein magnetisches Element (70) am anderen Ende der Koppelstange (60) angebracht ist, und
- die Verriegelungseinheit (10) ein Führungsrohr (47) aufweist, in welchem das magnetische Element (70) geführt ist,
**dadurch gekennzeichnet, dass**
- mindestens ein Vorspannelement (80) vorgesehen ist, welches so ausgestaltet ist, dass es auf die Koppelstange (60) wirkt und das magnetische Element (70) im Führungsrohr (47) radial spielfrei hält.

2. Verriegelungseinheit (10) nach Anspruch 1, **dadurch gekennzeichnet, dass**
- die Verriegelungseinheit eine Verdrehsicherung der Koppelstange (60) aufweist.

3. Verriegelungseinheit (10) nach Anspruch 2, **dadurch gekennzeichnet, dass**
- die Verdrehsicherung mittels mindestens eines Vorsprungs (65) an der Koppelstange (60) ausgeführt ist, welcher in eine Nut (35) einer Hülse (30) oder eines anderen Elements eingreift.

4. Verriegelungseinheit (10) nach Anspruch 2, **dadurch gekennzeichnet, dass**
- die Verdrehsicherung mittels mindestens eines Vorsprungs an eine Hülse oder an einem anderen Element ausgebildet ist, welcher in eine Nut der Koppelstange (60) eingreift.

5. Verriegelungseinheit (10) nach einem der vorhergehenden Ansprüche, **dadurch gekennzeichnet, dass**
- das mindestens eine Vorspannelement (80) einstückig mit der Koppelstange (60) ausgebildet ist.

6. Verriegelungseinheit (10) nach einem der vorhergehenden Ansprüche, **dadurch gekennzeichnet, dass**
- das mindestens eine Vorspannelement (80) in Form von einer elastischen Lasche oder in Form von zwei oder mehreren elastischer Laschen (82, 84) ausgebildet ist.

7. Verriegelungseinheit (10) nach Anspruch 6,
- wobei jede Lasche (82, 84) ein freies Ende aufweist.

8. Verriegelungseinheit (10) nach Anspruch 7,
- wobei freie Enden zweier Laschen (82, 84) unmittelbar benachbart zueinander angeordnet sind.

9. Verriegelungseinheit (10) nach einem der Ansprüche 6 bis 8,
- wobei die Lasche oder die Laschen (82, 84) zumindest in etwa kreissegmentförmig ausgebildet sind.

10. Verriegelungseinheit (10) nach einem der Ansprüche 1 bis 5, **dadurch gekennzeichnet, dass**
- das mindestens eine Vorspannelement (80) als Kappe (90) mit mehreren abstehenden elastischen Fingern (92) ausgebildet ist.

11. Verriegelungseinheit (10) nach einem der Ansprüche 1 bis 5, **dadurch gekennzeichnet, dass**
- das mindestens eine Vorspannelement als Druckfeder (85) ausgebildet ist.

12. Verriegelungseinheit (10) nach einem der vorhergehenden Ansprüche, **dadurch gekennzeichnet, dass**
- das magnetische Element (70) scheibensegmentförmig ausgebildet ist.

13. Verriegelungseinheit (10) nach einem der vorhergehenden Ansprüche, **dadurch gekennzeichnet, dass**
- das magnetische Element (70) auf einer zum mindestens einen Vorspannelement (80) entgegengesetzten Seite an der Koppelstange (60) angeordnet ist.

14. Verriegelungseinheit (10) nach einem der vorhergehenden Ansprüche, **dadurch gekennzeichnet, dass**
- das Führungsrohr (47) als Bestandteil des Kolbens (40) ausgebildet ist.

15. Verriegelungseinheit (10) nach einem der vorhergehenden Ansprüche, **dadurch gekennzeichnet, dass**
- die Verriegelungseinheit (10) einen Sensor (75) zum Abfühlen eines von dem magnetischen Element (70) erzeugen Magnetfelds aufweist.

## Claims

1. Locking unit (10) having:
- a hydraulically activatable piston (40);
- a solenoid (20) having a coil (22) and an armature (24); and
- at least one latching element (50);
- wherein the at least one latching element (50) interacts with the armature (24) or an armature rod (26) attached thereto, and the piston (40) or a sleeve connected to the piston has at least one latching receptacle (41, 42), so that the piston (40) as a result of the retaining interaction between the at least one latching element (50) and the at least one latching receptacle (41, 42) is able to be fixedly established; wherein
- the locking unit (10) has a coupling rod (60) which at one of its ends is fastened to the armature (24) or to the armature rod (26);
- a magnetic element (70) is attached to the other end of the coupling rod (60) opposite the armature (24) or the armature rod (26); and
- the locking unit (10) has a guide tube (47) in which the magnetic element (70) is guided,
**characterized in that**
- provided is at least one pre-loading element (80) which is designed in such a way that it acts on the coupling rod (60) and keeps the magnetic element (70) without radial play in the guide tube (47) .

2. Locking unit (10) according to Claim 1, **characterized in that**
the locking unit has an anti-rotation protection of the coupling rod (60).

3. Locking unit (10) according to Claim 2, **characterized in that**
the anti-rotation protection is embodied by means of at least one protrusion (65) on the coupling rod (60), which protrusion engages in a groove (35) of a sleeve (30) or another element.

4. Locking unit (10) according to Claim 2, **characterized in that**
the anti-rotation protection is formed by means of at least one protrusion on a sleeve or on another element, which protrusion engages in a groove of the coupling rod (60).

5. Locking unit (10) according to one of the preceding claims, **characterized in that**
the at least one pre-loading element (80) is formed so as to be integral to the coupling rod (60).

6. Locking unit (10) according to one of the preceding claims, **characterized in that**
the at least one pre-loading element (80) is designed in the form of an elastic lug, or in the form of two or a plurality of elastic lugs (82, 84).

7. Locking unit (10) according to Claim 6,
wherein each lug (82, 84) has one free end.

8. Locking unit (10) according to Claim 7,
wherein free ends of two lugs (82, 84) are disposed so as to be directly adjacent to one another.

9. Locking unit (10) according to one of Claims 6 to 8,
wherein the lug or lugs (82, 84) is/are at least approximately designed in the shape of a segment of a circle.

10. Locking unit (10) according to one of Claims 1 to 5, **characterized in that**
the at least one pre-loading element (80) is designed as a cap (90) having a plurality of projecting elastic fingers (92).

11. Locking unit (10) according to one of Claims 1 to 5, **characterized in that**
the at least one pre-loading element is designed as a compression spring (85).

12. Locking unit (10) according to one of the preceding claims, **characterized in that**
the magnetic element (70) is designed in the shape of a segment of a disc.

13. Locking unit (10) according to one of the preceding claims, **characterized in that**
the magnetic element (70) is disposed on the coupling rod (60) on a side that lies opposite the at least one pre-loading element (80).

14. Locking unit (10) according to one of the preceding claims, **characterized in that**
the guide tube (47) is designed as a constituent part of the piston (40).

15. Locking unit (10) according to one of the preceding claims, **characterized in that**
the locking unit (10) has a sensor (75) for sensing a magnetic field generated by the magnetic element (70) .

## Revendications

1. Unité de verrouillage (10), présentant :
- un piston actionnable hydrauliquement (40),
- un électroaimant (20) avec une bobine (22) et un induit (24), et
- au moins un élément d'encliquetage (50),
- l'au moins un élément d'encliquetage (50) coopérant avec l'induit (24) ou une tige d'induit (26) montée sur celui-ci et le piston (40) ou un manchon relié au piston présentant au moins un logement d'encliquetage (41, 42), de telle sorte que le piston (40) peut être immobilisé par la coopération de maintien de l'au moins un élément d'encliquetage (50) avec l'au moins un logement d'encliquetage (41, 42),
- l'unité de verrouillage (10) présentant une tige d'accouplement (60), qui est fixée à l'une de ses extrémités à l'induit (24) ou à la tige d'induit (26),
- un élément magnétique (70) étant monté à l'autre extrémité de la tige d'accouplement (60), à l'opposé de l'induit (24) ou de la tige d'induit (26), et
- l'unité de verrouillage (10) présentant un tube de guidage (47), dans lequel l'élément magnétique (70) est guidé,
**caractérisé en ce**
- **qu'**il est prévu au moins un élément de précontrainte (80) qui est conçu de telle sorte qu'il agit sur la tige d'accouplement (60) et maintient l'élément magnétique (70) sans jeu radial dans le tube de guidage (47).

2. Unité de verrouillage (10) selon la revendication 1, **caractérisée en ce que**
- l'unité de verrouillage présente un blocage en rotation de la tige d'accouplement (60).

3. Unité de verrouillage (10) selon la revendication 2, **caractérisée en ce que**
- le blocage en rotation est réalisé au moyen d'au moins une saillie (65) sur la tige d'accouplement (60), qui s'engage dans une rainure (35) d'un manchon (30) ou d'un autre élément.

4. Unité de verrouillage (10) selon la revendication 2, **caractérisée en ce que**
- le blocage en rotation est réalisé au moyen d'au moins une saillie sur un manchon ou sur un autre élément, qui s'engage dans une rainure de la tige d'accouplement (60) .

5. Unité de verrouillage (10) selon l'une quelconque des revendications précédentes, **caractérisée en ce que**
- l'au moins un élément de précontrainte (80) est réalisé d'un seul tenant avec la tige d'accouplement (60) .

6. Unité de verrouillage (10) selon l'une quelconque des revendications précédentes, **caractérisée en ce que**
- l'au moins un élément de précontrainte (80) est réalisé sous la forme d'une patte élastique ou sous la forme de deux ou plus de deux pattes élastiques (82, 84).

7. Unité de verrouillage (10) selon la revendication 6,
- chaque patte (82, 84) présentant une extrémité libre.

8. Unité de verrouillage (10) selon la revendication 7,
- les extrémités libres de deux pattes (82, 84) étant agencées directement au voisinage l'une de l'autre.

9. Unité de verrouillage (10) selon l'une quelconque des revendications 6 à 8,
- la patte ou les pattes (82, 84) étant réalisées au moins approximativement en forme de segment de cercle.

10. Unité de verrouillage (10) selon l'une quelconque des revendications 1 à 5, **caractérisée en ce que**
- l'au moins un élément de précontrainte (80) est réalisé sous forme de capuchon (90) avec plusieurs doigts élastiques (92) en saillie.

11. Unité de verrouillage (10) selon l'une quelconque des revendications 1 à 5, **caractérisée en ce que**
- l'au moins un élément de précontrainte est réalisé sous forme de ressort de compression (85).

12. Unité de verrouillage (10) selon l'une quelconque des revendications précédentes, **caractérisée en ce que**
- l'élément magnétique (70) est réalisé en forme de segment de disque.

13. Unité de verrouillage (10) selon l'une quelconque des revendications précédentes, **caractérisée en ce que**
- l'élément magnétique (70) est agencé sur la tige d'accouplement (60) sur un côté opposé à l'au moins un élément de précontrainte (80).

14. Unité de verrouillage (10) selon l'une quelconque des revendications précédentes, **caractérisée en ce que**
- le tube de guidage (47) est réalisé en tant que partie intégrante du piston (40).

15. Unité de verrouillage (10) selon l'une quelconque des revendications précédentes, **caractérisée en ce que**
- l'unité de verrouillage (10) présente un capteur (75) pour détecter un champ magnétique généré par l'élément magnétique (70).
